**Europäisches Patentamt**

**European Patent Office**

**Office européen des brevets**

(11) Veröffentlichungsnummer: **0 149 062**
**A1**

(12) # EUROPÄISCHE PATENTANMELDUNG

(21) Anmeldenummer: **84114145.0**

(22) Anmeldetag: **22.11.84**

(51) Int. Cl.⁴: **B 29 C 39/10**
**B 29 C 33/42**
**//B29K75:00, B29K105:04,**
**B29L31:34, B29K75:00,**
**B29K105:04, B29L31:34**

(30) Priorität: **01.12.83 DE 3343534**

(43) Veröffentlichungstag der Anmeldung:
**24.07.85 Patentblatt 85/30**

(84) Benannte Vertragsstaaten:
**DE FR GB IT**

(71) Anmelder: **Siemens Aktiengesellschaft**
**Berlin und München Wittelsbacherplatz 2**
**D-8000 München 2(DE)**

(72) Erfinder: **Burger, Hans-Joachim**
**Fasanenweg 1**
**D-8451 Kümmersbruck(DE)**

(72) Erfinder: **Schuster, Hubert**

**D-8451 Oberleinsiedl 17(DE)**

(54) **Verfahren zum Ausgiessen von Hohlräumen.**

(57) Die Erfindung bezieht sich auf ein Verfahren zum Ausgießen von einseitig offenen Hohlräumen (1), vorzugsweise den mit Bauteilen bestückten Hohlräumen von Gehäusen elektrischer Geräte. In den Hohlraum wird eine abgemessene Menge der Ausgußmasse, vorzugsweise Polyurethanschaum, eingebracht. Hernach wird die Öffnung durch ein durchlässiges, saugfähiges Gewebe (6), vorzugsweise aus Polpropylen, abgedeckt und mittels elastischer und einer starren Auflage abgedeckt. Nach Aushärten wird das Gewebe von der Oberfläche abgezogen, so daß sich eine Strukturoberfläche für die Ausgußmasse ergibt.

FIG 2

EP 0 149 062 A1

Siemens Aktiengesellschaft          Unser Zeichen
Berlin und München                  VPA 83 P 3405 E

## Verfahren zum Ausgießen von Hohlräumen

Die Erfindung bezieht sich auf ein Verfahren zum Ausgießen von einseitig offenen Hohlräumen, vorzugsweise Hohlräume, in denen elektrische bzw. elektronische Bauelemente untergebracht sind.

Bei bisher nach den bekannten Verfahren (US-PS 38 38 316) hergestellten Geräten mit Hohlräumen ließ es sich nicht vermeiden, daß die Oberfläche des Ausgusses ungleichmässige Struktur, beispielsweise durch eingeschlossene Luftblasen oder durch äußere Umwelteinflüsse aufwies.

Der vorliegenden Erfindung liegt die Aufgabe zugrunde, ein Verfahren der obengenannten Art anzugeben, bei dem ohne erheblichen Aufwand eine strukturierte Oberfläche beim Abschluß des Hohlraumes entsteht, so daß das Gerät u.a. auch nach den ästhetischen Gesichtspunkten ansprechend ausbildbar ist. Dies wird auf einfache Weise dadurch erreicht, daß in den Hohlraum eine abgemessene Menge Ausgießmasse eingebracht wird, anschließend über den Rand der Öffnung hinausragend ein durchlässiges, saugfähiges Gewebe gelegt wird, das nach Aushärten der Gießmasse entfernt wird. Hierdurch ist es auch möglich, Reparaturen an dem Gerät vorzunehmen, wobei nach anschliessendem Ausgießen praktisch die ursprüngliche Struktur an der Oberfläche wieder erreichbar ist. Es ist an sich bekannt, die Oberfläche von gepreßten Teilen durch Auflage von Geweben zu strukturieren (US-PS 30 75 249). Um eine Aufwölbung oder sonstige Umgleichmäßigkeiten in der Abschlußebene des Ausgusses zu vermeiden, ist es weiterhin vorteilhaft, wenn auf das saugfähige Ge-

La 2 Ts / 13.09.1984

webe eine elastische und hierüber eine starre Auflage aufgebracht wird, die nach Aushärten der Gießmasse gemeinsam mit dem saugfähigen Gewebe entfernt werden. Aus vorteilhafte Ausgießmasse haben sich Gießharze bewährt. Beonders vorteilhaft sind jedoch Polyurethanschäume, die in Verbindung mit einem Gewebe aus Polypropylen eine sehr gute Trennung zwischen Gewebe und Ausgußmasse ergeben.

Anhand der Zeichnung wird ein Ausführungsbeispiel gemäß der Erfindung beschrieben und das Verfahren näher erläutert.

Es zeigen:
Fig. 1 eine Vorrichtung zur Durchführung des Verfahrens in Seitenansicht,
Fig. 2 eine perspektivische Darstellung eines ausgegossenen Gerätes.

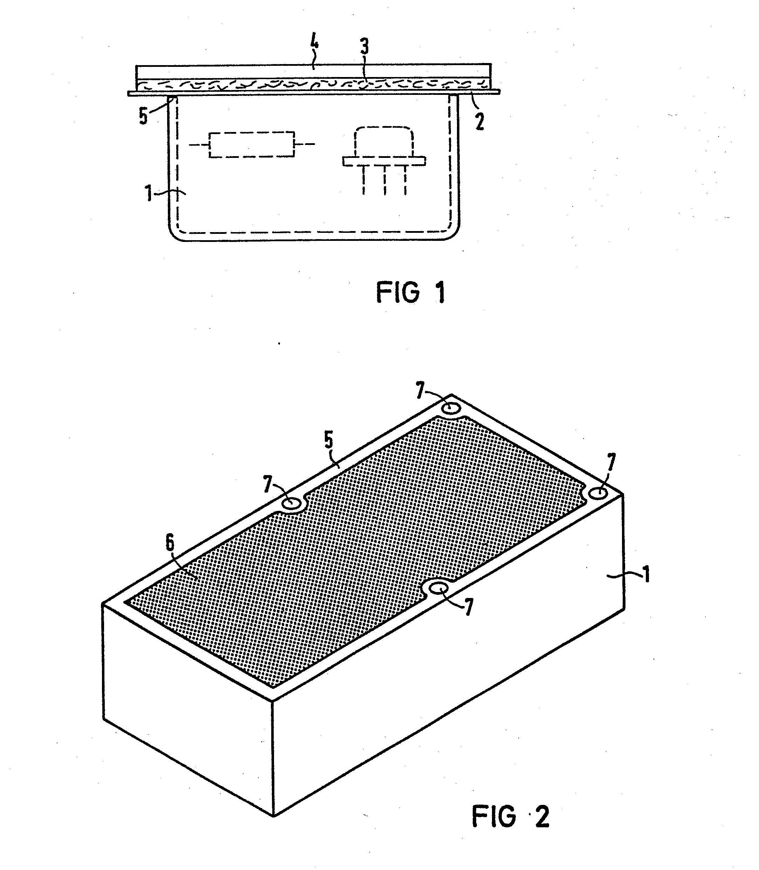

Aus der Fig. 1 ist das Gehäuse 1 eines elektrischen Schaltgerätes, beispielsweise eines berührungslos arbeitenden Oszillators, in dem die nicht näher dargestellten Bauelemente untergebracht sind, zu ersehen. Auf die offene Seite ist ein Gewebe 2 aufgelegt, das von einer elastischen Auflage 3 und einer starren Auflage 4 abgedeckt ist. Die elastische Auflage kann aus einem Silikongummi oder Schaumgummi bestehen und die starre Auflage aus einer Eisenplatte. Nach Einbringen der Bauelemente in das Gehäuse 1 wird eine abgemessene Menge, beispielsweise von Polyurethanschaum, in das Gehäuse eingebracht. Das Gewebe 2 wird auf die Seitenwände 5 des Gehäuses 1 aufgelegt und mittels der Auflagen 3, 4 beschwert. Beim Aushärten des Polyurethanschaumes wird das Gewebe 2 benetzt, Lufteinschlüsse können durch das Gewebe entweichen. Nach Aushärtung werden die Auflagen 3 und 4 entfernt und das Gewebe 2 von der Ausgußoberfläche 6 abgezogen, so daß sich die aus Fig. 2 ersichtliche Struktur der Ausgußoberfläche 6 ergibt. Die Seitenwände 5 und Befestigungslöcher 7 bleiben hierbei frei von Ausgußmasse. Bei der Auswahl der Ausgußmasse und des saugfähigen Gewebes ist darauf zu achten, daß sich das Gewebe nicht chemisch mit der Ausgußmasse verbindet, so daß es unter Bildung einer der Struktur des Gewebes entsprechenden Oberfläche abgezogen werden kann. Das Aussehen der Ausgußoberfläche 6 gleicht beispielsweise einer Leinenstruktur, was das optische Aussehen des Gerätes insgesamt verschönert.

5 Patentansprüche
2 Figuren

0149062

Patentansprüche

1. Verfahren zum Ausgießen von einseitig offenen Hohlräumen, vorzugsweise Hohlräume, in denen elektrische
bzw. elektronische Bauelemente untergebracht sind,
d a d u r c h   g e k e n n z e i c h n e t , daß
in den Hohlraum eine abgemessene Menge Ausgießmasse
eingebracht wird, anschließend über den Rand der Öffnung hinausragend ein durchlässiges, saugfähiges Gewebe (2) gelegt wird, das nach Aushärten der Gießmasse
entfernt wird.

2. Verfahren nach Anspruch 1, d a d u r c h   g e -
k e n n z e i c h n e t , daß auf das saugfähige
Gewebe (2) eine elastische (3) und hierüber eine
starre Auflage (4) aufgebracht wird, die nach Aushärten der Gießmasse gemeinsam mit dem saugfähigen Gewebe (2) entfernt werden.

3. Verfahren nach Anspruch 1 oder 2, d a d u r c h
g e k e n n z e i c h n e t , daß als Ausgießmasse
Polyurethanschaum benutzt ist.

4. Verfahren nach Anspruch 1 oder 2, d a d u r c h
g e k e n n z e i c h n e t , daß als Ausgießmasse
Gießharze benutzt sind.

5. Verfahren nach einem der vorhergehenden Ansprüche,
d a d u r c h   g e k e n n z e i c h n e t , daß
das Gewebe aus Polypropylen besteht.

FIG 1

FIG 2

**0149062**

Nummer der Anmeldung

**Europäisches Patentamt**

# EUROPÄISCHER RECHERCHENBERICHT

EP 84 11 4145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.4) |
|---|---|---|---|
| A | CH-A- 299 458 (SIEMENS)<br>* Anspruch; Unteransprüche * | 1 | B 29 C 39/10<br>B 29 C 33/42 //<br>B 29 K 75:00<br>B 29 K 105:04 |
| A | US-A-2 722 962 (W.J. HAMPSHIRE)<br>* Ansprüche; Figuren; Spalte 2, Zeilen 29-37 * | 1 | B 29 L 31:34<br>B 29 K 75:00<br>B 29 K 105:04<br>B 29 L 31:34 |
| A | GB-A- 970 067 (SIDNEY EMSIG)<br>* Seite 2, Zeilen 13-55; Seite 2, Zeile 116 - Seite 4, Zeile 50; Ansprüche; Figuren * | 1 | |
| A | US-A-3 075 249 (J.R. SUCHER)<br>* Spalte 3, Zeile 75 - Spalte 4, Zeile 63; Ansprüche; Figuren * | 1 | |
| A | FR-A-2 489 176 (BARLAND)<br>* Seite 1, Zeilen 10-22; Seite 1, Zeilen 30-34; Anspruch 2 * | 1 | **RECHERCHIERTE SACHGEBIETE (Int. Cl.4)**<br><br>B 29 C |
| A | GB-A- 621 978 (L. RADO)<br>* Ansprüche * | 1 | |
| A | US-A-3 838 316 (D.R. BROWN et al.)<br>* Ansprüche; Figuren; Spalte 3, Zeile 34 - Spalte 8, Zeile 12 * | 1 | |

Der vorliegende Recherchenbericht wurde für alle Patentansprüche erstellt.

| Recherchenort | Abschlußdatum der Recherche | Prüfer |
|---|---|---|
| DEN HAAG | 21-03-1985 | VANHECKE H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82